# EUROPEAN PATENT APPLICATION

(11) **EP 1 209 828 A2**
(43) Date of publication of application: **29.05.2002**
(21) Application number: 01309967.6
(22) Date of filing: 28.11.2001
(51) Int. Cl.: H04B 10/18

(54) **Optical transmission system and optical transmission method**

(30) Priority: 28.11.2000 JP 2000361860
(71) Applicant: NEC CORPORATION, Tokyo (JP)
(72) Inventor: Sakauchi, Masahiro, c/o NEC Corporation, Tokyo (JP)
(74) Representative: Moir, Michael Christopher

(57) **Abstract**

An optical transmission system includes : an optical transmitting device; and an optical receiving device. The optical transmitting device includes : an encoder for encoding a data signal with an error-correcting code; and an optical transmitter, and the optical receiving device includes an optical receiver and a decoder. The decoder error-corrects a received signal to provide error rate information. The optical transmitter controls a chirp coefficient of an electroabsorption modulator based on the error rate information to minimize errors or error rate.

## Description

### BACKGROUND OF THE INVENTION

### Field of the Invention

The present invention relates to an optical transmission system and an optical transmission method and more particularly, to an optical transmission system and an optical transmission for compensating for any wavelength deterioration of a light signal based on a wavelength dispersion of an optical fiber transmission line.

### Description of the Prior Art

When a light signal (for example, a light signal modulated with a non-return-to-zero (NRZ) signal of 10 Gb/s) propagates over a long optical fiber transmission line, the light signal's pulse waveform is deteriorated due to the wavelength dispersion characteristics of the optical fiber, thus degrading the receiving sensitivity. Since in recent years, an erbium doped fiber amplifier has been developed for practical use, the distance between optical repeaters is increased. Thus, wavelength dispersion of an optical fiber transmission line has become a main cause for deterioration in transmission characteristics of a light signal. In addition, when the bit rate of a light signal is increased with a narrowed spectral bandwidth, the light signal will be greatly affected by wavelength dispersion.

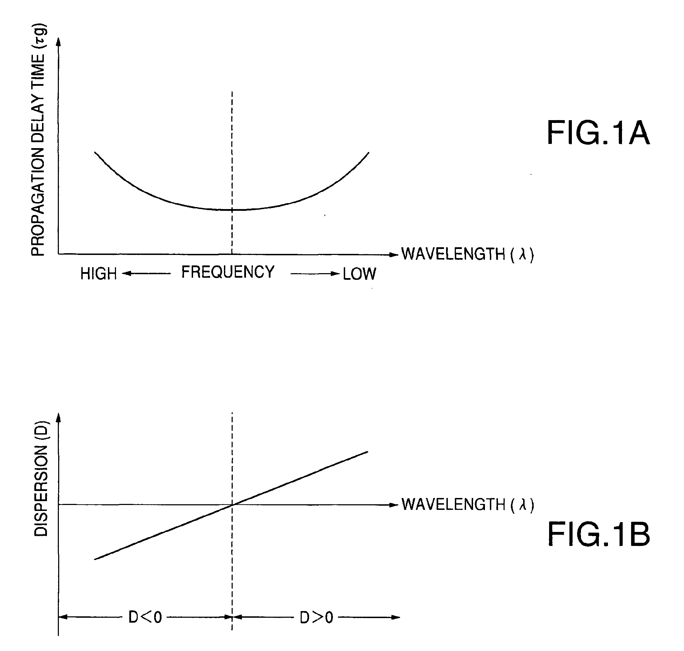

FIGS. 1A and 1B show an example of wavelength dispersion characteristics of an optical fiber. FIG. 1A shows the relationship between light wavelength λ and propagation delay time τg and FIG. 1B shows the relationship between light wavelength λ and wavelength dispersion D. The wavelength dispersion D is expressed as D = dτg/dλ.

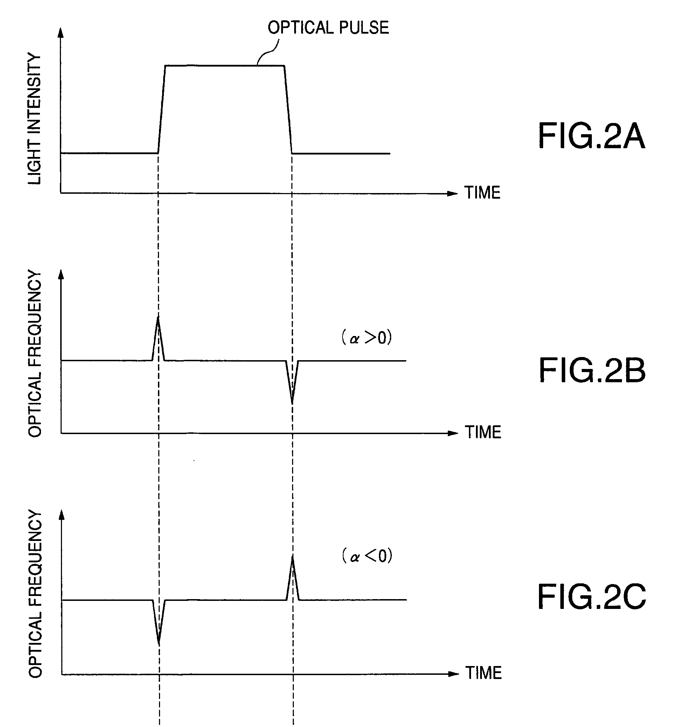

FIGS. 2A to 2C show that the optical frequency varies at the leading and trailing edges of a generated optical pulse when a laser beam is intensity-modulated through electroabsorption optical modulation (hereinafter called EA optical modulation) . A letter α in FIGS. 2B and 2C denotes a chirp coefficient, which is a parameter for showing a frequency variation. FIG. 2B shows that for α > 0, the optical frequency increases at the leading edge of the optical pulse and the optical frequency decreases at the trailing edge of the optical pulse. FIG. 2C shows that for α < 0, the optical frequency decreases at the leading edge of the optical pulse and the optical frequency increases at the trailing edge of the optical pulse.

A modulated optical pulse with a chirp coefficient α more than zero (α > 0) has a short-wavelength component at the leading edge and a long-wavelength component at the trailing edge. When this optical pulse propagates through a region with a wavelength dispersion D more than zero (D > 0), the pulse width is increased with a deteriorated pulse waveform because the short-wavelength component propagates there at a higher speed than that of the long-wavelength component. When this optical pulse propagates through another region with a wavelength dispersion D less than zero (D < 0), the pulse width is decreased with a deteriorated pulse waveform because the short-wavelength component propagates there at a lower speed than that of the long-wave component. Another modulated optical pulse with a chirp coefficient α less than zero (α < 0) also has a deteriorated waveform.

Another possible cause for deterioration in waveform of an optical pulse is self-phase modulation (SPM), which is one of nonlinear optical effects. SPM is a phenomenon wherein a frequency chirping occurs at the leading and trailing edges of an optical pulse when the light intensity of the optical pulse is more than a predetermined threshold. When any frequency variation occurs at the leading and trailing edges of the optical pulse, the waveform of the optical pulse is deteriorated through group velocity dispersion (GVD).

Wavelength dispersion and SPM are usually affected by each other. As a result, the waveform of the optical pulse is deteriorated with a degraded receiving sensitivity, and thus, it will be difficult to provide dispersion compensation as designed.

In order to compensate for wavelength dispersion of the optical fiber, a dispersion compensator such as a dispersion compensation fiber (DCF) or a chirped fiber grating (CFG) is used. A DCF is an optical fiber which has the capability of canceling wavelength dispersion produced on an optical fiber transmission line. However, the DCF has a small mode field diameter (MFD), which is approximately 4 to 5 µm. Therefore, in the DCF, its transmission performance is prone to deterioration due to some nonlinear optical effect. In addition, since a bending loss and dispersion compensation characteristics are traded off with each other, the DCF cannot be bent finely and it is difficult to downsize the dispersion compensator. A CFG is a dispersion compensator with a grating formed on the side of an optical fiber in the longitudinal direction. However, the CFG is largely dependent on temperature and thus, it requires a temperature regulation feature. In addition, a ripple may occur in the CFG as one of the group delay characteristics.

Moreover, since both DCF and CFG are optical passive components, they will necessarily cause an excessive loss of light signal and deteriorate its transmission performance. Both components have a fixed amount of dispersion compensation and thus, a deviation in residual dispersion may occur between channels. When an electroabsorption optical modulator (hereinafter called EA modulator) which absorbs input light according to an applied voltage is used as an optical modulator, a variation in a chirp coefficient α of an EA modulation section may prevent implementation of dispersion compensation as designed.

### BRIEF SUMMARY OF THE INVENTION

### Object of the Invention

It is, therefore, an object of at least the preferred embodiment of the present invention to provide an optical transmission system and an optical transmission method which can compensate for wavelength deterioration caused by wavelength dispersion and SPM and improve the receiving sensitivity, without using any dispersion compensator which is an optical passive component.

### Summary of the Invention

A first optical transmission system according to the present invention comprises an optical transmitting device, an optical receiving device, and an optical fiber transmission line placed between these devices. The optical transmitting device comprises an encoder for encoding a data signal with an error-correcting code and an optical transmitter for converting the coded data signal into a light signal based on error rate information transmitted by the optical receiving device to provide an output. The optical receiving device comprises an optical receiver for converting the received light signal into an electrical signal and a decoder for error-correcting that electrical signal to provide error rate information and a data signal. The optical transmission system can comprise a line over which the error rate information is propagated to the optical transmitting device.

In a second optical transmission system according to the present invention, as compared with the above-mentioned first optical transmission system, the optical transmitting device further comprises a demodulator for demodulating the error rate information transmitted by the optical receiving device, an optical coupler for branching an error rate information light signal transmitted via the optical fiber transmission line, and an optical receiver for converting the branched light signal into an electrical signal, and the optical receiving device further comprises a modulator for modulating the error rate information provided by the decoder, an optical transmitter for converting the error rate information into a light signal, and an optical coupler for introducing the light signal onto the optical fiber transmission line.

A third optical transmission system according to the present invention comprises a plurality of optical transmitting devices for transmitting light signals of different wavelengths, a multiplexer for wavelength-multiplexing the plurality of light signals, an optical fiber transmission line over which the wavelength-multiplexed light signal is propagated, a demultiplexer for demultiplexing the wavelength-multiplexed light, and a plurality of optical receiving devices for receiving light signals of the corresponding wavelengths. In the third system, each optical transmitting device comprises an encoder for encoding a data signal with an error-correcting code and an optical transmitter for converting the coded data signal into a light signal based on error rate information transmitted by the corresponding optical receiving device toprovide an output, and each optical receiving device comprises an optical receiver for converting the received light signal into an electrical signal and a decoder for error-correcting that electrical signal to provide error rate information and a data signal. In addition, the third system further comprises a line over which the above-mentioned error rate information is transmitted to the optical transmitter.

A fourth optical transmission system according to the present invention is an optical transmission system which comprises two stations, and a down optical fiber transmission line and an up optical fiber transmission line placed between them. Each of the above-mentioned stations comprises an optical transmitting section and an optical receiving section. The optical transmitting section comprises a plurality of optical transmitting devices for transmitting light signals of different wavelengths and a multiplexer for wavelength-multiplexing the plurality of light signals. The optical receiving section comprises a demultiplexer for demultiplexing the wavelength-multiplexed light and a plurality of optical receiving devices for receiving light signals of the corresponding wavelengths. The above-mentioned optical transmitting device comprises an encoder for encoding a data signal with an error-correcting code and an optical transmitter for converting the coded data signal into a light signal based on error rate information transmitted by the corresponding optical receiving device to provide an output, and the above-mentioned optical receiving device comprises an optical receiver for converting the received light signal into an electrical signal and a decoder for error-correcting that electrical signal to provide error rate information and a data signal. In the first station of the fourth system, each decoder of the optical receiving section transmits error rate information to the corresponding encoder of the optical transmitting section and that error rate information is transmitted to the second station. In the second station, each decoder of the optical receiving section transmits error rate information to the optical transmitter of the optical transmitting section.

In each of the above-mentioned first to third optical transmission systems, the optical fiber transmission line can comprise an optical amplifier for amplifying a light signal transmitted by the optical transmitting device, an optical coupler placed at each of the input and output of that optical amplifier, and an optical fiber directly connecting to these optical couplers. In the fourth optical transmission system, the optical fiber transmission line may comprise an optical amplifier.

In each of the first to fourth optical transmission systems, the optical transmitter in the optical transmitting device can comprise an electroabsorption modulator for modulating a laser beam through electroabsorption optical modulation based on the coded data signal and drive control means for receiving error rate information and supplying that data signal and a DC bias voltage to that electroabsorption modulator.

An optical transmission method according to the present invention comprises the steps of encoding a data signal with an error-correcting code, converting this signal into a light signal in an optical transmitter with an electroabsorption modulator to provide an output, error-correcting the signal on the receiving side to provide error rate information, and controlling the electroabsorption modulator based on the error rate information to reduce errors on the receiving side.

Method features corresponding to all apparatus features disclosed herein are provided.

At least the preferred embodiment of the present invention can compensate for wavelength deterioration caused by wavelength dispersion of an optical fiber and improve the receiving sensitivity without a dispersion compensator.

### BRIEF DESCRIPTION OF THE DRAWINGS

Preferred features of the present invention will now be described, by way of example only, with reference to the accompanying drawings, in which:-
FIGS. 1A and 1B are graphs for showing an example of wavelength dispersion characteristics of an optical fiber;
FIGS. 2A, 2B and 2C show that an optical frequency varies at leading and trailing edges of an optical pulse;
FIG. 3 is a block diagram for showing an example of an optical transmission system according to the present invention;
FIG. 4 is a block diagram for showing an example of the optical transmission system according to the present invention;
FIG. 5 is a block diagram for showing an example of the optical transmission system according to the present invention;
FIG. 6 is a block diagram for showing a configuration of an optical transmitter;
FIG. 7 is a graph for showing characteristics of an EA modulator;
FIG. 8 is a block diagram for showing an example of the optical transmission system with an optical amplifier according to the present invention;
FIG. 9 is a block diagram for showing an example of the optical transmission system for wavelength-multiplexed light signals according to the present invention;
FIG. 10 is a block diagram for showing an example of the optical transmission system for wavelength-multiplexed light signals according to the present invention;
FIG. 11 is a block diagram for showing an example of the optical transmission system for wavelength-multiplexed light signals according to the present invention;
FIG. 12 is a block diagram for showing an example of the optical transmission system with up and down optical fiber transmission lines according to the present invention; and
FIG. 13 is a block diagram for showing an example of the optical transmission system with up and down optical fiber transmission lines according to the present invention.

### DETAILED DESCRIPTION OF THE PREFERRED EMBODIMENTS

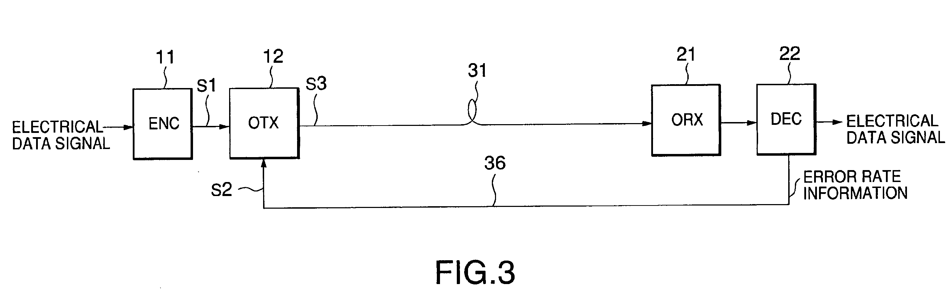

In an example of a first optical transmission system shown in FIG. 3, an optical fiber transmission line 31 is placed between an optical transmitting device and an optical receiving device. The optical transmitting device comprises an encoder (ENC) 11 for encoding an electrical data signal with an error-correcting code and an optical transmitter (OTX) 12 for converting the encoded electrical data signal into a light data signal for transmission. The optical receiving device comprises an optical receiver (ORX) 21 for receiving the light data signal transmitted by the transmitting device and converting it into an electrical signal and a decoder (DEC) 22 for decoding and error-correcting the electrical signal to provide an electrical data signal and for comparing error rates before and after the error correction process to provide error rate information. The decoder (DEC) 22 transmits the error rate information to the optical transmitter (OTX) 12 via a line 36 and the optical transmitter (OTX) 12 controls the light data signal to minimize errors in the decoder 22. The line 36 is provided separately from the optical fiber transmission line 31. When a line is provided for communicating management information, this line may be used for transmitting error rate information.

The above-mentioned encoder (ENC) 11 has the capability of error-correcting and encoding a data signal, for example, through forward error correction (FEC). For example, the encoder 11 redundantly encodes an NRZ electrical data signal of 9.95 Gb/s into a signal of 10.66 Gb/s (S1) to provide an output. The optical transmitter 12 intensity-modulates a laser beam of 1.55 µm in wavelength through EA modulation based on the redundantly-encoded electrical data signal (S1) and the error rate information (S2) to provide a light data signal (S3). The optical receiver 21 converts an NRZ light data signal of 10.66 Gb/s into an electrical signal. The decoder 22 decodes the FEC redundantly-encoded electrical data signal of 10.66 Gb/s into an NRZ electrical data signal of 9.95 Gb/s to perform an error correction process. In addition, the decoder 22 compares error rates before and after the error correction process to provide the error rate information (S2), that is, the rate of errors which occur on the optical fiber transmission line.

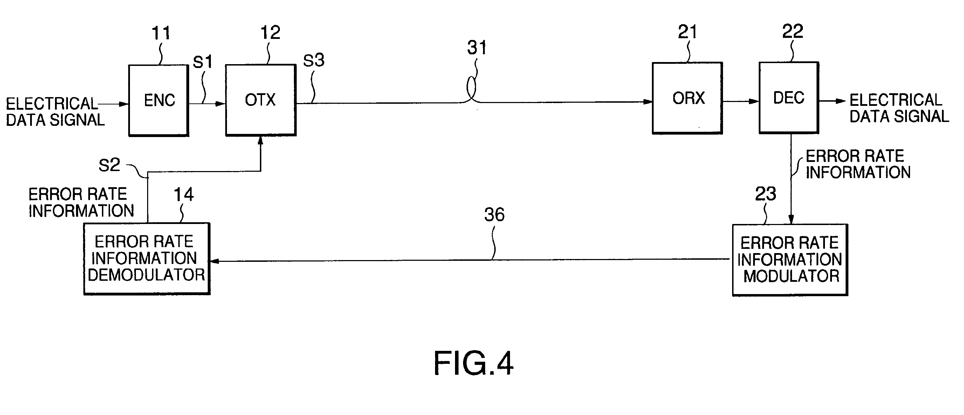

In an example of the optical transmission system shown in FIG. 4, the optical receiving device further comprises an error rate information modulator 23 for generating an error rate information electrical signal which is AM-modulated with the error rate information and then providing an output. The optical transmitting device further comprises an error rate information demodulator 14 for demodulating the error rate information electrical signal transmitted via the line 36 to provide it to the optical transmitter 12.

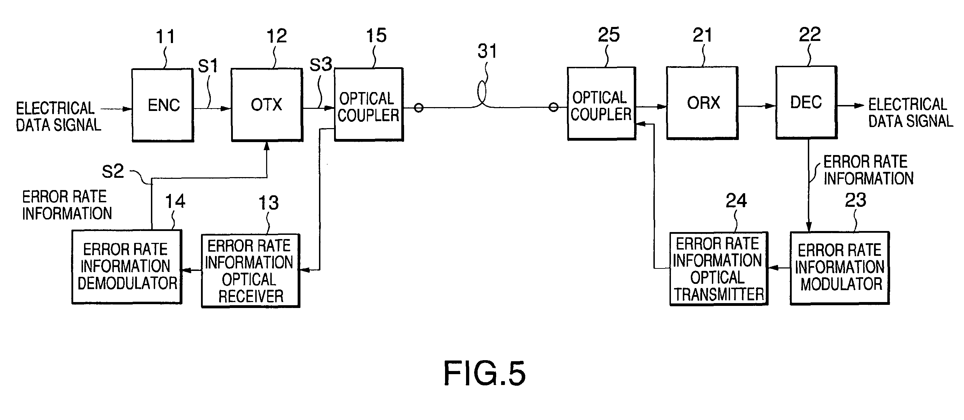

In an example of the second optical transmission system shown in FIG. 5, the optical receiving device further comprises an error rate information optical transmitter 24 for converting the error rate information into a light signal and an optical coupler 25 for introducing the light signal into the optical fiber transmission line 31. A light data signal is transmitted to the optical receiver 21 through the optical fiber transmission line 31 and the optical coupler 25. An optical isolator may be placed between the optical coupler 25 and the error rate information optical transmitter 24 as necessary. The optical transmitting device further comprises an optical coupler 15 for branching the error rate information light signal transmitted through the optical fiber transmission line 31 and an error rate information optical receiver 13 for converting the light signal into an electrical signal. It is desirable that the wavelength of a light data signal provided by the optical transmitter 12 is different from that of an error rate information light signal provided by the error rate information optical transmitter 24.

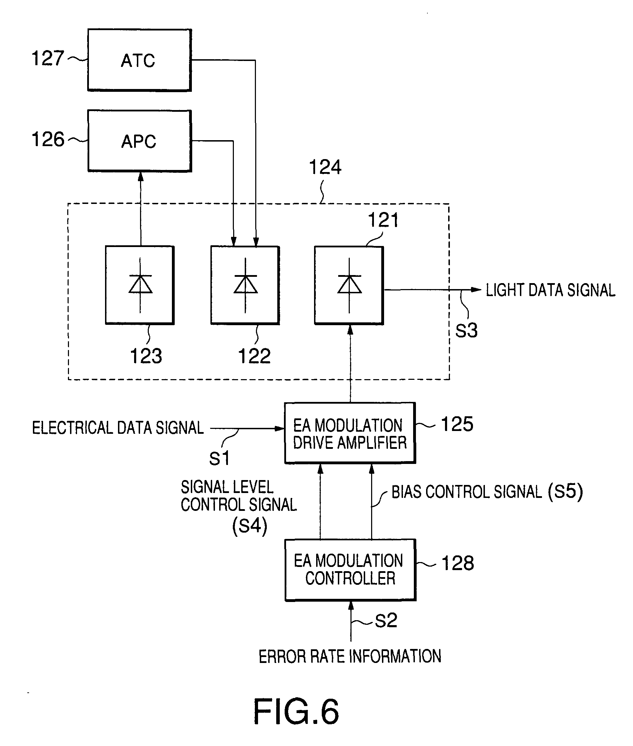

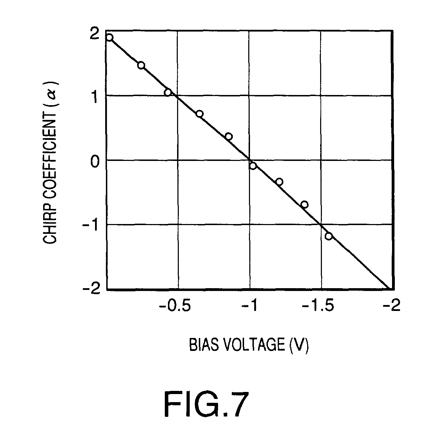

FIG. 6 shows an example of the optical transmitter (OTX) 12. The optical transmitter 12 comprises an EA modulation module 124, and an auto power control (APC) circuit 126 and an auto temperature control (ATC) circuit 127 both for controlling that module. The EA modulation module 124 has a structure that an EA modulation section 121, a semiconductor laser 122, and a photodiode 123 are integrated into that module. The APC circuit 126 controls so that the semiconductor laser 122 can provide a constant optical output depending on the optical level of the semiconductor laser 122 detected by the photodiode 123. The ATC circuit 127 controls the temperature of the semiconductor laser 122 to be able to be kept constant for a stable laser wavelength of the CW laser. The optical transmitter 12 further comprises an EA modulation drive amplifier 125 and an EA modulation controller 128. The EA modulation drive amplifier 125 supplies the EA modulation section 121 with a coded electrical data signal (S1) superposed with a DC bias voltage. Based on the error rate information (S2), the EA modulation controller 128 transmits to the EA modulation drive amplifier 125 a control signal (S4) and a DC bias control signal (S5) for controlling the electrical data signal (S1) and the level of the DC bias voltage, respectively. The EA modulation section 121 receives a CW laser beam provided by the semiconductor laser 122 and then intensify-modulates it according to the NRZ data signal of 10.66Gb/s (S1) supplied by the EA modulation drive amplifier 125. The chirp coefficient α of the EA modulation section 121 varies according to the bias voltage as shown in FIG. 7. FIG. 7 shows the characteristics that the chirp coefficient α varies from a positive value to a negative value when the bias voltage drops from 0 V. The EA modulation controller 128 generates a level control signal (S4) and a DC bias control signal (S5) for providing an optimum chirp coefficient α in order to minimize the error rate of a data signal produced on the optical fiber transmission line 31, based on the error rate information (S2). Since the EA modulation section 121 may be damaged when an applied voltage is more than +0.3 V or less than -4 V, it should be appreciated that the DC bias and drive electrical signals must be controlled within the applied voltage range. In addition, the EA modulation section must be controlled to the extent that the extinction ratio may not be affected by the applied voltage.

The operation of the optical fiber transmission system in FIG. 5 will be described below. In the optical transmission device, the encoder 11 produces a redundant signal of the NRZ electrical data signal of 9.95 Gb/s through FEC and then provides an NRZ electrical data signal (S1) of 10.66 Gb/s. The optical transmitter 12 converts the data signal (S1) into a light data signal (S3) and transmits this light signal to the optical receiving device through the optical coupler 15 and the optical fiber transmission line 31. The optical fiber transmission line 31 is made of, for example, a single mode fiber of 80 km long. The optical receiver 21 converts the light data signal (S3) into an NRZ electrical data signal of 10.66 Gb/s. The decoder 22 decodes and error-corrects this data signal to provide an NRZ electrical data signal of 9.95 Gb/s. The decoder 22 compares the code error rates before and after the error correction process to provide error rate information (S2) which indicates the rate of errors occurring on the optical fiber transmission line. The error rate information modulator 23 converts the error rate information into an AM modulating signal. The error rate information optical transmitter 24 converts this AM modulating signal into a light signal and then transmits it to the optical transmitting device via the optical coupler 25 and the optical fiber transmission line 31. It is desirable that the wavelength of this light signal is different from that of the light data signal (S3). The error rate information optical receiver 13 receives an error rate information light signal from the optical coupler 15 and converts it into an electrical signal. The error rate information demodulator 14 demodulates this electrical signal and transmits the demodulated signal to the optical transmitter 12 as error rate information S2. In the optical transmitter 12, the EA modulation controller 128 receives the error rate information (S2), controls the DC bias voltage and the data signal supplied to the EA modulation section 121, and controls the chirp coefficient α of the EA modulation section to minimize errors . Thus, possible wavelength deterioration in optical pulses due to wavelength dispersion and SPM can be compensated for without any dispersion compensator such as a dispersion compensation fiber (DCF) or a chirped fiber grating (CFG), by controlling the chirp coefficient α of the EA modulation section as described above.

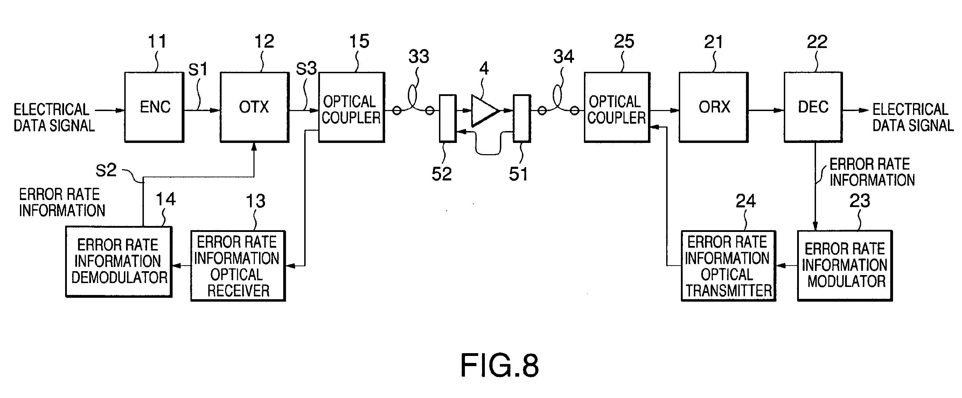

In an example of the optical fiber transmission system as illustrated in FIG. 8, an optical amplifier 4 is placed on the optical fiber transmission line to amplify a light data signal. Alternatively, a plurality of optical amplifiers may be placed there. Optical couplers 52, 51 are provided at the input and the output of the optical amplifier 4, respectively. An error rate information light signal introduced from the optical coupler 25 onto the optical fiber transmission line 34 is branched by the optical coupler 51 and then introduced by the optical coupler 52 onto the optical fiber transmission line 33. Even when such an optical amplifier is provided on the optical fiber transmission line, the error rate information can be transmitted to the optical transmitting device by bypassing the optical amplifier 4. If the error rate information light signal is modulated with a low-frequency signal, the light signal requires no optical amplifier because it can be transmitted over a longer distance than a data signal. However, if necessary, an optical amplifier may be provided for the error rate information light signal.

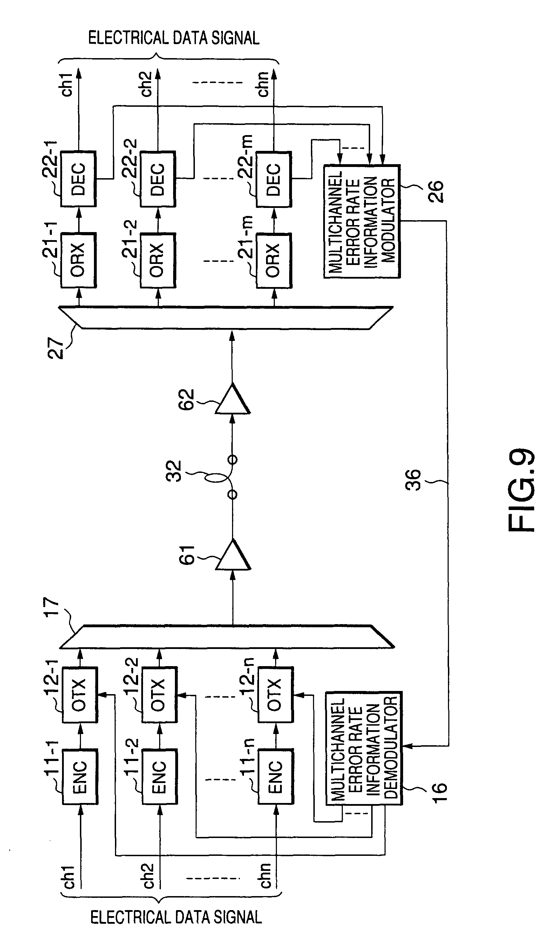

An example of the third optical transmission system according to the present invention as illustrated in FIG. 9 can be applicable to wavelength division multiplexed light. The third system has a plurality of optical transmission devices which comprises encoders (ENC) 11-1 to 11-n for encoding data signals on a plurality of channels ch1 to chn, respectively, and has optical transmitters (OTX) 12-1 to 12-n for converting the encoded data signals into light signals, respectively. A multiplexer 17 multiplexes the light signals transmitted by these optical transmitters 12-1 to 12-n. A multichannel error rate information demodulator 16 demodulates an error rate information electrical signal obtained by multiplexing error rate information for each channel, performs an error correction process as necessary, and then transmits the demodulated signals to the corresponding optical transmitters (OTX) 12-1 to 12-n. The optical receiving device comprises a demultiplexer 27 for demultiplexing the multichannel light data signal for each channel, optical receivers (ORX) 21-1 to 21-n for converting a light signal for each channel into an electrical signal, and decoders. The decoders (DEC) 22-1 to 22-n decode these electrical signals, respectively, and perform an error correction process on them to provide electrical data signals . In addition, each decoder compares error rates before and after the error correction process to provide error rate information. The multichannel error rate information modulator 26 multiplexes the error rate information, generates an error rate information electrical signal, and then transmits it to the multichannel error rate information demodulator 16 via the line 36. In this optical transmitting system, the optical fiber transmission line 32 can comprise optical amplifiers 61, 62.

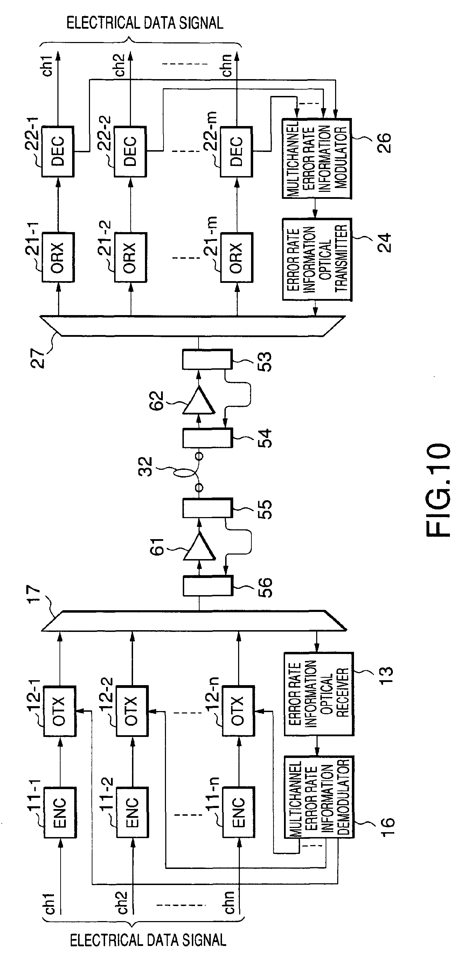

In an example of the optical transmission system as illustrated in FIG. 10, a multiplexed error rate information is transmitted to the optical transmitting device via the optical fiber transmission line. The optical receiving device comprises an error rate information optical transmitter 24 for converting an error rate information electrical signal into a light signal. This light signal is introduced onto the optical fiber transmission line 32 through a demultiplexer and transmitted to the optical transmitting device by optical couplers 53, 54, 55, 56 by bypassing optical amplifiers 62, 61. In the optical transmitting device, the error rate information optical receiver 13 receives error rate information via the multiplexer 17 and then converts it into an electrical signal to transmit the converted signal to the multichannel error rate information demodulator 16.

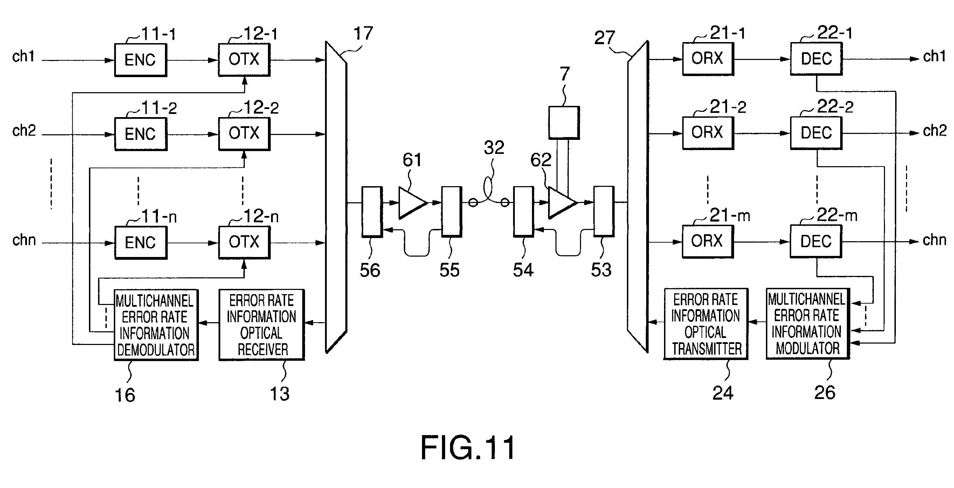

In the third optical transmission system as illustrated in FIGS. 9 and 10, the structure of each element and the controlling method are the same as those described above. This system can compensate for dispersion without any variation among channels because the chirp coefficient α of the EA modulation section can be optimally controlled for each channel. FIG. 11 shows an example wherein a dispersion compensator 7 is connected to the optical amplifier 62. This optical transmission system also can provide dispersion compensation without any variation among channels.

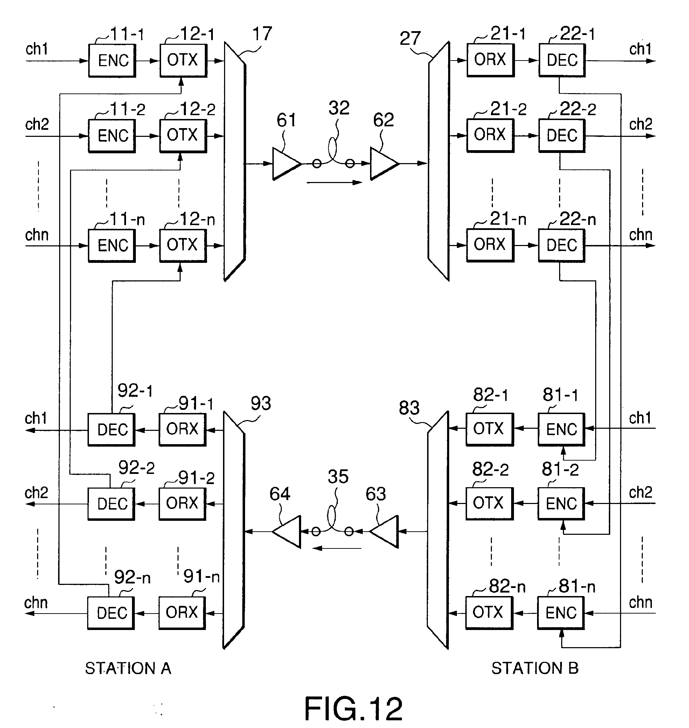

FIG. 12 shows an example of the fourth optical transmission system wherein each of two optical stations comprises an optical transmitting device and an optical receiving device for servicing wavelength division multiplexing light signals. An down optical fiber transmission line 32 is provided between the optical transmitting device in the station A and the optical receiving device in the station B and an up optical fiber transmission line 35 is provided between the optical transmitting device in the station B and the optical receiving device in the station A. The optical transmitting device in the station A comprises encoders (ENC) 11-1 to 11-n for encoding electrical data signals on channels ch1 to chn, respectively, and optical transmitters (OTX) 12-1 to 12-n for converting the encoded data signals into light signals, respectively. The multiplexer 17 multiplexes the light data signals provided by the optical transmitters (OTX) 12-1 to 12-n to provide an output. The optical transmitting device may comprise an optical amplifier 61. The optical receiving device in the station B comprises a demultiplexer 27 for demultiplexing a wavelength multiplexed light, optical receivers (ORX) 21-1 to 21-n for receiving light data signals to convert them into electrical signals, and decoders (DEC) 22-1 to 22-n. These decoders decode and error-correct the respective electrical signals to provide a data signal, and in addition, they compare the error rates before and after the error correction process toprovide the respective error rate information. The optical transmitting device in the station B may comprise a preliminary optical amplifier 62 for amplifying a multichannel light signal to a predetermined level. The optical fiber transmission line can comprise an optical amplifier.

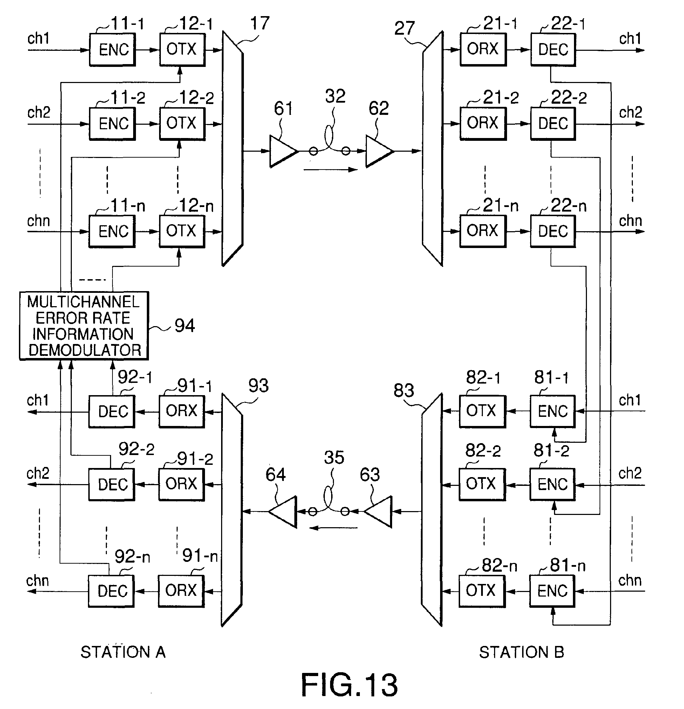

As shown in FIG. 12, the optical transmitting device in the station B and the optical receiving device in the station A have the same configuration as those of the optical transmitting device and the optical receiving device in FIG. 9. The operation of the fourth optical transmission system will be as described below. In the station B, the encoders (ENC) 81-1 to 81-n of the optical transmitting device receive NRZ electrical data signals of 9.95 Gb/s on the channels ch1 to chn and receive error rate information from the decoders (DEC) 22-1 to 22-n of the optical receiving device. Each of the encoders (ENC) 81-1 to 81-n performs an error correction and encoding process through forward error correction (FEC), appends error rate information to the overhead (OH) portion of an FEC frame of a redundant data signal or the OH portion of an SDH/SONET frame, and provides an NRZ electrical data signal of 10.66 Gb/s including the error rate information. In the station A, the decoders (DEC) 92-1 to 92-n of the optical receiving device receive the electrical data signals including the error rate information from the optical receivers (ORX) 91-1 to 91-n, respectively. Each of the decoders (DEC) 92-1 to 92-n extracts the error rate information appended to the OH portion of the FEC frame or the OH portion of the SDH/SONET frame, decodes the redundant electrical data signal for a code error correction process, and then provide an electrical data signal for the corresponding channel ch1 to chn. The error rate information is provided to each of the optical transmitters (OTX) 12-1 to 12-n. In the system as illustrated in FIG. 12, the decoders (DEC) 92-1 to 92-n decode the error rate information. In an example of the optical transmission system as shown in FIG. 13, the station A comprises a multichannel error rate information demodulator 94. This demodulator 94 receives error rate information to perform an error correction process on the error rate information and demodulates the error rate information for each channel to provide it to the optical transmitters (OTX) 12-1 to 12-n, respectively. The optical transmitters (OTX) 12-1 to 12-n operate in the same manner as described above. The optical fiber transmission line in the fourth optical transmission system requires no optical coupler which would be otherwise provided preceding or following the optical amplifier. The systems in shown FIGS. 9 to 12 can comprise a coupler in place of the demultiplexer, if the optical receivers (ORX) have filters.

To summarise, the receiving side detects an error rate and sends it back to the transmitting side and the transmitting side in turn controls the chirp coefficient of the EA modulator based on this information to compensate for wavelength deterioration in an optical pulse. Thus, the present system can reduce wavelength dispersion without dispersion compensator, resulting in an improved receiving sensitivity.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical transmission system includes : an optical transmitting device; and an optical receiving device. The optical transmitting device includes : an encoder for encoding a data signal with an error-correcting code; and an optical transmitter, and the optical receiving device includes an optical receiver and a decoder. The decoder error-corrects a received signal to provide error rate information. The optical transmitter controls a chirp coefficient of an electroabsorption modulator based on the error rate information to minimize errors or error rate.

## Claims

1. An optical transmitting device for transmitting a light signal to an optical receiving device via an optical fiber transmission line, comprising:
an encoder for encoding a data signal with an error-correcting code; and
an optical transmitter for converting the coded data signal into a light signal based on error rate information transmitted by the optical receiving device to provide an output.

2. An optical transmitting device, comprising:
an encoder for encoding a data signal with an error-correcting code;
an optical coupler for branching an error rate information light signal transmitted by an optical receiving device via an optical fiber transmission line;
an optical receiver for converting the branched error rate information light signal into an electrical signal;
a demodulator for demodulating that electrical signal; and
an optical transmitter for converting the coded data signal into a light signal based on the demodulated error rate information to provide an output.

3. The optical transmission device according to claim 1,
wherein said optical transmitting device comprises a demodulator for demodulating the error rate information transmitted by the optical receiving device, and
said optical receiving device comprises a modulator for modulating the error rate information provided by the decoder.

4. The optical transmission device according to claim 1,
wherein said optical transmitting device comprises:
an optical coupler for branching an error rate information light signal transmitted via the optical fiber transmission line; and
an optical receiver for converting the branched light signal into an electrical signal.

5. The optical transmitting device according to claim 1 or 2,
wherein said optical transmitter comprises:
an electroabsorption modulator for modulating a laser beam through electroabsorption optical modulation based on the coded data signal; and
drive control means for receiving the error rate information and supplying the coded data signal and a DC bias voltage to that electroabsorption modulator.

6. The optical transmitting device according to claim 5,
wherein said drive control means comprises:
a drive amplifier for amplifying the coded data signal and supplying that amplified coded data signal and the DC bias voltage to the electroabsorption modulator; and
a controller for receiving the error rate information and controlling the drive amplifier to minimize errors in the optical receiving device.

7. An optical receiving device for receiving a light signal from an optical transmitting device via an optical fiber transmission line, comprising:
an optical receiver for converting the received light signal into an electrical signal; and
a decoder for error-correcting that electrical signal to provide error rate information and a data signal.

8. The optical receiving device according to claim 7, further comprising a modulator for modulating the error rate information provided by the decoder.

9. The optical receiving device according to claim 7 or 8, further comprising:
an optical transmitter for converting the modulated error rate information into a light signal; and
an optical coupler for introducing that light signal onto the optical fiber transmission line.

10. An optical transmission system, comprising:
an optical transmitting device according to any of claims 1 to 6;
an optical receiving device according to any of claims 7 to 9; and
an optical fiber transmission line between the optical transmitting device and the optical receiving device.

11. An optical transmission system, comprising:
an optical transmitting device;
an optical receiving device; and
an optical fiber transmission line placed between the optical transmitting device and the optical receiving device,
wherein said optical transmitting device comprises:
an encoder for encoding a data signal with an error-correcting code;
an optical coupler for branching an error rate information light signal transmitted by the optical receiving device via the optical fiber transmission line;
a second optical receiver for converting the branched error rate information light signal into an electrical signal;
a demodulator for demodulating that error rate information electrical signal; and
a first optical transmitter for converting the coded data signal into a light signal based on the error rate information to provide an output,
said optical receiving device comprises:
a first optical receiver for converting the received light signal into an electrical signal;
a decoder for error-correcting that electrical signal to provide error rate information and a data signal;
a modulator for modulating the error rate information;
a second optical transmitter for converting the modulated error rate information into a light signal; and
an optical coupler for introducing that light signal onto
the optical fiber transmission line, and
said first optical transmitter comprises:
an electroabsorption modulator for modulating a laser beam through electroabsorption optical modulation based on the coded data signal; and
drive control means for receiving the error rate information and supplying that coded data signal and a DC bias voltage to that electroabsorption modulator.

12. An optical transmission system, comprising:
a plurality of optical transmitting devices for transmitting light signals of different wavelengths;
a multiplexer for wavelength-multiplexing the plurality of light signals;
an optical fiber transmission line over which the wavelength-multiplexed light signal is propagated;
a demultiplexer for demultiplexing the wavelength-multiplexed light; and
a plurality of optical receiving devices for receiving light signals of the corresponding wavelengths,
wherein each of said optical transmitting devices is according to claim 1;
each of said optical receiving devices is according to claim 7, and
said system comprises a line over which said error rate information is transmitted to the optical transmitter.

13. The optical transmission system according to claim 12, further comprising:
a multichannel modulator for multiplexing and modulating error rate information provided by each decoder; and
a multichannel demodulator for demodulating and demultiplexing the error rate information transmitted by that multichannel modulator to provide it to the corresponding optical transmitter.

14. The optical transmission system according to claim 12, further comprising:
an optical transmitter for converting the multiplexed and modulated error rate information into a light signal to introduce it onto the optical fiber transmission line; and
an optical receiver for converting the error rate information light signal transmitted via the optical fiber transmission line into an electrical signal.

15. The optical transmission system according to claim 14,
wherein the error rate information light signal provided by the optical transmitter is introduced through the demultiplexer onto the optical fiber transmission line and that error rate information light signal is provided to the optical receiver through the multiplexer.

16. The optical transmission system according to claim 12,
wherein said optical fiber transmission line comprises:
an optical amplifier for amplifying a wavelength-multiplexed light signal;
an optical coupler placed at each of the input and output of that optical amplifier; and
an optical fiber directly connecting these optical couplers.

17. The optical transmission system according to claim 16,
wherein a dispersion compensator is connected to the optical amplifier.

18. The optical transmission system according to claim 12,
wherein said optical transmitter is according to claim 5.

19. An optical transmission system, comprising:
two stations, and
a down optical fiber transmission line and an up optical fiber transmission line placed between the two stations,
wherein each of said stations comprises:
an optical transmitting section comprising a plurality of optical transmitting devices for transmitting light signals of different wavelengths and a multiplexer for wavelength-multiplexing the plurality of light signals; and
an optical receiving section comprising a demultiplexer for demultiplexiflg the wavelength-multiplexed light and a plurality of optical receiving devices for receiving light signals of the corresponding wavelengths,
said optical transmitting device being according to claim 1,
said optical receiving device being according to claim 7, and
in the first station, each decoder of the optical receiving section transmits error rate information to the corresponding encoder of the optical transmitting section and that error rate information is transmitted to the second station, and
in the second station, each decoder of the optical receiving section transmits the error rate information to the optical transmitter of the optical transmitting section.

20. The optical transmission system according to claim 19,
wherein said second station comprises a multichannel demodulator for error-correcting the error rate information transmitted by the decoder to the optical transmitter.

21. The optical transmission system according to claim 19,
wherein said optical fiber transmission line comprises an optical amplifier for amplifying the wavelength-multiplexed light.

22. The optical transmission system according to claim 19,
wherein said optical transmitter is according to claim 5.

23. An optical transmission method, comprising the steps of:
encoding a data signal with an error-correcting code;
converting this signal into a light signal in an optical transmitter with an electroabsorption modulator to provide an output;
error-correcting the signal on the receiving side to provide error rate information; and
controlling the electroabsorption modulator based on the error rate information to reduce errors on the receiving side.

24. The optical transmission method according to claim 23,
wherein a DC bias voltage supplied to the electroabsorption modulator is controlled to control the chirp coefficient.

25. The optical transmission method according to claim 23,
wherein the error rate information is sent back via the optical fiber transmission line over which the data signal is propagated.
